(19) Europäisches Patentamt / European Patent Office / Office européen des brevets

(11) **EP 3 660 621 B1**

(12) **EUROPEAN PATENT SPECIFICATION**

(45) Date of publication and mention
of the grant of the patent:
**25.02.2026  Bulletin 2026/09**

(21) Application number: **18306574.7**

(22) Date of filing: **27.11.2018**

(51) International Patent Classification (IPC):
***G05D 23/19*** *(2006.01)*

(52) Cooperative Patent Classification (CPC):
**G05D 23/1931; F24D 19/1018; G05D 23/1917;**
F24D 2220/0257; F24D 2220/042

(54) **CONTROL OF A HEATING DEVICE USING ROOM TEMPERATURE ESTIMATION**

STEUERUNG EINER HEIZVORRICHTUNG MITHILFE VON RAUMTEMPERATURSCHÄTZUNG

COMMANDE D'UN DISPOSITIF DE CHAUFFAGE À L'AIDE D'UNE ESTIMATION DE LA
TEMPÉRATURE AMBIANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2020  Bulletin 2020/23**

(73) Proprietor: **Schneider Electric Industries SAS
92500 Rueil Malmaison (FR)**

(72) Inventors:
• **BUNES, Jan
Plymouth PL3 6NU (GB)**

• **SULIKOWSKA, Aleksandra
PL15 7BX, Launceston,
Cornwall (GB)**

(74) Representative: **Schneider Electric
Service Propriété Industrielle
35, rue Joseph Monier
92500 Rueil-Malmaison (FR)**

(56) References cited:
EP-A2- 3 056 825       GB-A- 2 452 043
US-A1- 2005 209 813    US-A1- 2010 095 906
US-A1- 2013 178 989    US-A1- 2013 204 442

**Description**

The invention concerns the control of heating power of a heating device involving in particular, while not exclusively, a thermostatic control device.

Thermostatic control devices are controlling the heating power of a heating device by regulating the flow of heating fluid going through a pipe of the heating device (for example a radiator), via a valve for example. Various techniques for controlling the heating power are known, as for example disclosed in documents GB 2 452 043 A, US 2005/209813 A1, EP 3 056 825 A2, US 2013/204442 or US 2013/178989.

To enhance the control of the heating power of the heating device, some heating systems are equipped with temperature sensors, which enable access to the temperature of the room in which the heating device is located. The difference between the temperature of the room and the target temperature may be used to determine the speed of the heating. For example, the heating power can be proportional to this difference.

In addition, the temperature level or condition of the room may be considered when determining the heating power. For example, if the temperature in the room is mild, e.g. between 16°C and 19°C, then the heating speed may be reduced compared to a situation where the temperature in the room is cold, e.g. between 8°C and 13°C (below a given threshold).

To estimate the temperature in the room, depending on the implementation, temperature sensors may be disposed remote from the heating device and radiator valve, or instead may be disposed near the heating device and/or radiator valve. As mentioned above, a radiator valve is in charge of regulating the flow of heating fluid going through the pipe, and can be manually or automatically controlled.

However, when a temperature sensor is located near the heating device or the valve, the temperature that is measured is actually higher than the temperature in the room, because of the radiated, conducted, and convected heat output by the heating device and valve due to the heating fluid flowing therethrough, at least some of which heat may be sensed by the nearby temperature sensor. The accuracy of the temperature that is measured is therefore deteriorated.

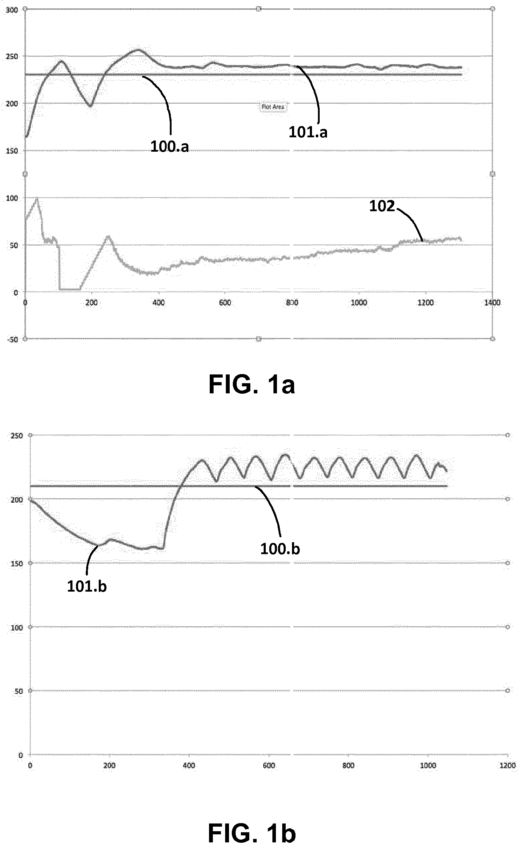

Referring to Figures 1a and 1b, there are shown two plots comprising curves illustrating the performance of a heating system according to the prior art.

Figure 1a comprises curve 100.a that represents the time evolution of the setpoint (desired/target temperature) of the heating system. The setpoint is constant over a considered time window of 1300 seconds. The unit that is used to measure the setpoint corresponds to the temperature in degrees Celsius (°C) multiplied by ten. Therefore, on Figure 1a, the target temperature is approximately set to 24°C.

Curve 101.a shows the measured room temperatures that the heating system influences by controlling the heating power, using a valve for example.

Curve 102 shows how the heating system controls the heating power it provides in percentage demand. The range varies between 0 and 100%. 100% demand means that the heating system is at full output power, whereas 50% demand means that the heating system is at half power.

As can be observed, there is an offset of approximately 1°C between the curves 100.a and 101.a. This is caused, as explained above, by the fact that the temperatures that are measured are biased by the heat generated by the radiator.

Figure 1b shows another way of controlling the heating power in a system of the prior art, where the measured temperature shown on curve 101.a oscillates around an average temperature value. The average temperature value is around 22,5°C. There is also an offset between the average temperature value and the target temperature shown on curve 100.a. The offset is approximately equal to 1,5°C.

There is a need to improve the estimation of the temperature in a room in which a heating system is located, in order to improve the accuracy of the control of the heating power.

The present invention alleviates the drawback of prior systems and is defined in claims 1 to 17.

BRIEF DESCRIPTION OF DRAWINGS

By way of example only, the embodiments of the present disclosure will be described with reference to the accompanying drawings, wherein:

FIG. 1a and FIG 1b are plots representing the performance of heating systems according to the prior art ;

FIG. 2 represents a heating system according to some embodiments of the invention;

FIG. 3a is a top view of a control device according to some embodiments of the invention;

FIG. 3b is a front view of a control device according to some embodiments of the invention;

FIG. 4 is a flowchart representing the steps of a method according to some embodiments of the invention.

DETAILED DESCRIPTION

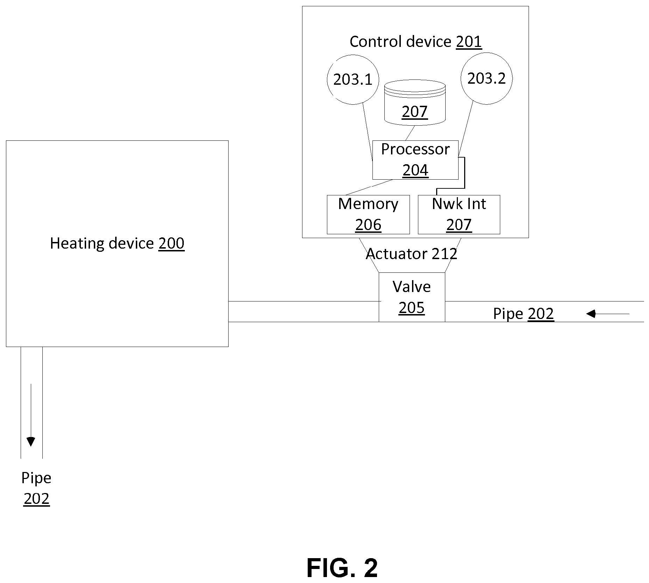

Figure 2 shows a heating system according to some embodiments of the invention.

The heating system comprises a heating device 200, such as a radiator for example, and a control device 201 arranged (e.g., adapted or configured) for controlling the heating power of the heating device 200 via a valve 205 for example. As shown, the heating system may comprise an actuator 212 (e.g., an electric motor, such as a step motor, or a solenoid device) that transforms electrical control signals of control device 201 into mechanical movement of a component of valve 205 (e.g., translation of a stem of valve 205) to regulate the fluid flow through valve 205. In various implementations, actuator 212 may be part of (e.g., integral to) the control device 201, or part of (e.g., integral to) valve 205, or may be a separate component mechanically coupled to valve 505 and at least electrically coupled to control device 201. As described, valve 205 is arranged for regulating the flow of fluid going through the radiator 200 via a pipe 202. However, no restriction is attached to the valve 205, which may alternatively be any mechanical system arranged for regulating the flow of fluid going through the radiator 200. In addition, the heating device 100 may alternatively be an electrical device and the control device 201 may be an electronic unit controlling the current/voltage powered to the radiator 200. In what follows, the example of a mechanical unit using a valve 205 is considered, for illustrative purposes only.

The heating system further comprises at least a first temperature sensor 203.1. The first temperature sensor 203.1 is arranged for sensing a first ambient temperature value in a target zone. As used herein, unless the context clearly dictates otherwise, the wording *"ambient"* in the context of a control device temperature sensor (e.g., a temperature sensor integral to the control device) means that the sensed temperature is representative of the air in the vicinity of and external to the control device 201 (even if the sensor is mounted in the interior of the control device, such as within a housing). It distinguishes the sensed temperature from, for example, at least the temperature of the heating device, the temperature of the valve body, the temperature of the fluid going through the valve and the heating device, the temperature of a component in good thermally conductive coupling with the heating fluid or valve body, and the temperature of air that represents (e.g., is a measure of) the temperature of the valve body and/or the heating fluid therein (e.g., air that substantially comprises air heated by the valve body (which is heated by the heating fluid) without substantially mixing with air from or in the vicinity of and external to the control device 201). As such, the target zone may be in the vicinity of the control device and it may exclude the pipe 202 and the heating device 200. Excluding the pipe 202 and the heating device 200 means that the temperature sensors are at least separated by a minimum distance from the pipe 202 and from the heating device 200 and/or are otherwise configured such that the temperatures sensed thereby are representative or indicative of the air temperature surrounding the control device as influenced by the room air temperature and not substantially attributed to heat transferred (i.e., radiated, conducted, and/or convected) from the radiator device or valve body such that the influence of room air temperature cannot be adequately sensed so as to provide a room temperature estimate by application of a model, as will be further understood below. For example, the minimum distance may be several centimeters, such as 3, 4, 5 or 10 centimeters for example. The orientation of the temperature sensors may also be opposite to the heating device and/or to the pipe 202. In addition, the control device may be configured so as to shield radiative heat from the valve body impinging on the sensors and/or to prevent air heated by the valve body (which is heated by the heating fluid) from flowing / convecting internally through the control device to the sensors and/or to prevent heat conduction from the valve body to the sensors.

In what follows, a system comprising two temperature sensors 203.1 and 203.2 is described, for illustrative purposes only. The present invention is however applicable to any number of temperature sensors (one temperature sensor, two temperature sensors, or more).

The two temperature sensors 203.1 and 203.2 may be located in the control device 201, as shown on Figure 2. The second temperature sensor 203.2 is arranged for sensing a second ambient temperature value, which may be in the same target zone as the first temperature sensor 203.1.

In this illustrative embodiment, the control device 201 comprises a processor 204 associated with a memory 206, such as a Random Access Memory, RAM, a Read Only Memory, ROM, flash memory, hard drive and/or any type of solid state memory or other storage media. The memory 206 is arranged for storing at least some of the data used during execution of the method according to the invention, such as for example the mathematical model that is used to determine a room temperature based on the ambient temperatures sensed by sensors 203.1 and 203.2. As used herein, the term "based on" is not exclusive and allows for being based on additional factors not described, unless the context clearly dictates otherwise.

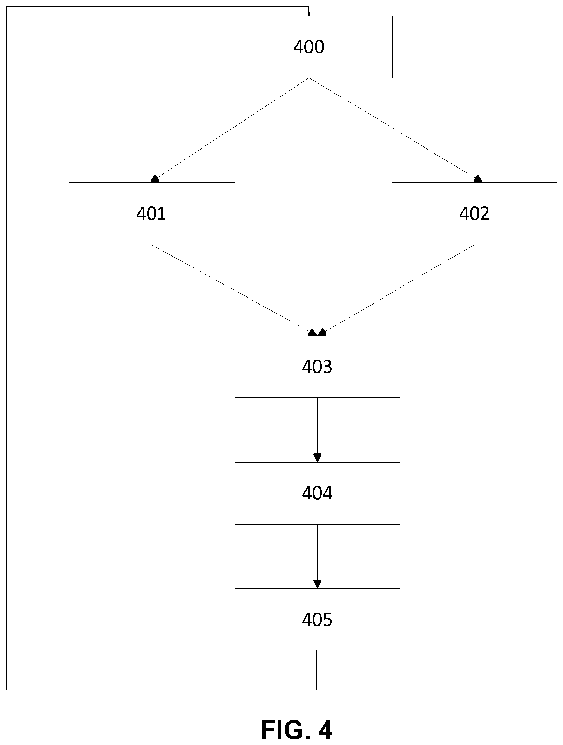

The memory 206 may store the coefficients of the mathematical model. The processor 204 is arranged for executing instructions for implementing the steps of the method illustrated referring to Figure 4. The control device 201 may also comprise a database 207, which may be implemented on one or more memory devices such as provided by memory 206. In some embodiments, the processor and at least some of the memory (e.g., ROM, at least some of the required RAM and Flash), and at least some of the interfaces may be monolithically integrated as a microcontroller (e.g.,

off-the-shelf) or ASIC designed and configured for implementing the steps of the method illustrated on Figure 4.

The processor 204 (as well as any other separate chips that, in some implementations, may be used for memory, interfaces, etc.) may be mounted on a Printed Circuit Board, PCB, which is not represented on Figure 2. The temperature sensors 203.1 and 203.2 may also be mounted on the PCB.

The control device 201 may further comprise a network interface 207 to communicate with an external communications network, such as an IP network for example. The control device 201 may receive data from the IP network to be stored in the memory 206. For example, the control device 201 may receive updates for the mathematical model, such as updated coefficients and/or constants of the polynomial model. The updated coefficients may be stored to replace former coefficients and the room temperature is then calculated based on the updated coefficients. This enables to continuously improve the accuracy of the room temperature estimation. For example, the mathematical model may be updated depending on current weather conditions, on changes impacting the room insulation or any other changes impacting the calculation of the room temperature. In some alternative embodiments, however, the model may be stored remotely, such as in an external master thermostat or controller hub, and the processor 204 may communicate sensor data via the network interface 207 to the master thermostat or controller hub, which then may apply the mathematical model (as further described below) to estimate the room temperature for communication to processor 204 for use in controlling valve 205 to regulate heating fluid flow.

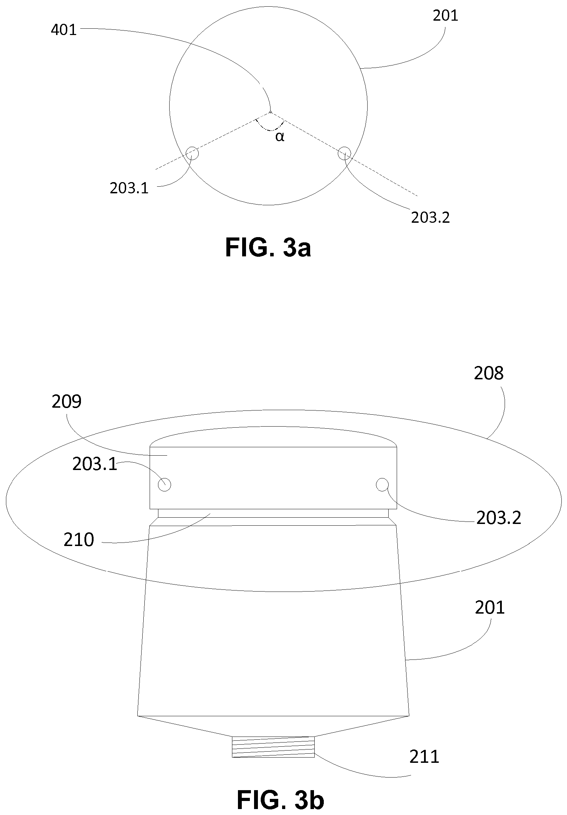

In some embodiments, the control device 201 may be a cylinder (or generally cylindrically-shaped) mounted vertically or horizontally near to the heating device 201. In the case where the control device 201 is mounted vertically, the PCB may be located in the top portion of the control device 201, as shown on Figures 3a and 3b described hereafter.

Figure 3a shows a top view of a control device 201 according to the invention.

Two temperature sensors are located in the control device 201 The heating device has a cylindrical shape and the first and second temperature sensors are located near an outer edge of the control device. As shown in the top view, the cylindrical shape of the control device has a circumference that is defined by a circle of which the center is denoted 401. An angle $\alpha$ is defined between the line passing through the center 401 and the first temperature sensor 203.1 and the line passing through the center 401 and the second temperature sensor 203.1. In this example, the angle $\alpha$ is 120°; in other examples it may be comprised between 60° and 180°; for example, in some embodiments it may be approximately equal to 90°.

Figure 3b shows a front side view of a control device 201 according to the invention.

The two ambient temperature sensors 203.1, 203.2 are located in a top portion 209 of the control device 201. The top portion 209 may include air cavities and/or air ducts, or grooves or slots, that make up a pickup zone 210 that is in fluid connection with the air in the vicinity of the control device 201. The one or more sensors 203.1, 203.2 are arranged in the pickup zone for sensing the ambient temperature. In this illustrative embodiment, the pickup zone 210 is relatively distant from pipe 202 through which the fluid is flowing and from the heating device 200.

The top portion 209 is opposite to a portion 211 of the control device 201 that is arranged for being connected to the valve 205. In this illustrative embodiment, the actuator 212 is included within control device 201.

As the two ambient temperature sensors are located in a top portion of the control device 201, this enables to sense the ambient temperature values in a target zone 208 that excludes the pipe 202 through which the fluid is flowing and which excludes the heating device 200.

Compared to a system comprising only one temperature sensor, a control device as shown in Figures 2, 3a and 3b with two sensors or more may increase robustness of the temperature estimation as the estimation is less sensitive to the orientation of the control device, and in particular is less sensitive to a rotation of the control device around its cylindrical axis. Therefore, even when a misalignment of the control device 201 with respect to the valve 205 occurs during mounting, this will not have a detrimental effect on measuring the ambient room temperature.

Also, according to some embodiments, there is no required or preferred rotational orientation of the control device 201 with respect to the valve 205 or radiator device during mounting, and mounting at certain rotational orientations will not have a detrimental effect on measuring the ambient room temperature, as the model (further described below) may be generated or built so as to be rotationally invariant (by building the model using data sets for varying rotations).

In addition, if the difference between the first and second temperature values is bigger than a preset threshold, an alert may be generated by the control device as one of the temperature sensor may be defective.

The control device 201 may also comprise a user interface, such as a rotatable button, not shown on Figure 2 or Figures 3a and 3b, to enable a user to manually modify the target temperature. Alternatively, the target temperature may be set via a thermostat that is distinct from the control device 201 and that is configured for communicating with the control device 201 to set the target temperature.

Figure 4 is a flowchart illustrating the steps of a method according to some embodiments of the invention.

At step 400, a mathematical model is stored in the control device 201. According to some embodiments, the mathematical model is obtained from a remote server via the network interface 207. Alternatively, the mathematical model may be predetermined and stored during manufacturing in the control device 201.

Constants and coefficients characterizing the mathematical model, described hereafter, can be derived through a number of different methods mathematically. These methods may involve tools such as System Identification Toolbox™ using Matlab™. No restriction is attached to the method used to determine the coefficients.

The above-mentioned method may comprise some of the following steps:

- collecting datasets, from test environments, from trial installations, etc. These datasets may be issued from temperature sensors. At least one of the sensors acquires a reference temperature (the room temperature) that is the goal of model to estimate from the inputs;

- preparing the datasets for appropriate input and output (the room temperature) cases;

- using a mathematical tool (the tool mentioned above for example) to explore and identify models that are effective in predicting output cases, given inputs;

- deploy the models to trial installations to validate simulations.

The chosen model may be the one that minimizes the errors e(k) according to a given criterion.

At step 401, a first ambient temperature value is acquired by the first temperature sensor 203.1, in the target 208 zone located in the vicinity of the control device 201.

At step 402, a second ambient temperature value is acquired by the second temperature sensor 203.2, in the target zone 208.

Steps 401 and 402 may be synchronized to obtain consistent temperature measures (i.e., sensors 203.1 and 203.2 acquire ambient temperature measurements simultaneously; e.g., in parallel in response to a common synch/-trigger signal). Alternatively, steps 401 and 402 may be performed sequentially. According to some embodiments, steps 401 and 402 (whether conducted in parallel or sequentially) are performed at regular timing intervals, such as once per minute for example. Alternatively, steps 401 and 402 can be triggered by predefined events.

The first ambient temperature value is noted t1 and the second ambient temperature value is noted t2 in what follows.

At step 403, a room temperature value is obtained by applying a mathematical model to the first and second ambient temperature values. The room temperature is representative of a temperature in a room where the heating device 200 is located. This means that the first and second ambient temperature values t1 and t2, or a combination of them (for example u=(t1+t2)/2, or some other weighted average of t1 and t2), are used as input variables of the mathematical model to estimate the room temperature. Determining the estimate may involve calculations and/or may in some embodiment be implemented using one or more look-up tables. The mathematical model may be a polynomial model of degree N, which corresponds to the highest exponent of the input variables in the polynomial model.

The mathematical model may be a linear polynomial model, that is, a polynomial model of degree 1.

For example, the linear polynomial model can be noted f, and is such that :

y=f(u), y being the room temperature;

where f is defined by :

$$y(k) + a_1 y(k-1) + \cdots + a_{k_a} y(k-k_a)$$
$$= b_0 u(k-n) + b_1 u(k-n-1) + \cdots + b_{k_b-1} u(k-n-k_b+1) + e(k)$$

wherein k is a time index ;

wherein $k_a$, $k_b$ and n are constants and wherein $a_1$ to $a_{k_a}$ and $b_0$ to $b_{k_b-1}$ are coefficients of the linear polynomial model that are predetermined (stored in advance) or obtained from the network;

wherein e(k) is an error of time index k.

The present invention is not restricted to a linear polynomial model and can be extended to any mathematical model that is determined to obtain the room temperature based on at least one sensor temperature. For example, the following mathematical models can be used in replacement of the linear polynomial model :

- Linear models :

○ Process models, which are low-order transfer function models with a static gain, time constant and input/output delay;

○ Input-output polynomial models, such as ARX, ARMAX, Box Jenkins, BJ, and Output Error, OE, models;

○ State-space models, with free, canonical and structured parameterizations, such as ARC, ARMAX, OE and BJ;

○ Transfer function models;

○ Linear Grey-Box models obtained by estimating coefficients of linear differential, difference and state-space equations;

○ Frequency-Response Models obtained using spectral analysis;

○ Correlation Models which are impulse-response models obtained using correlation analysis; and

- Non-linear models:

○ Non-linear ARX models, which are non-linear behavior models using dynamic networks such as sigmoid and wavelet;

○ Hammerstein-Wiener Models, which are connections of linear dynamic systems with static non-linearities such as saturation and dead zone;

o Non-linear Grey-Box models, which are obtained by estimating coefficients of nonlinear differential, difference and state-space equations.

According to embodiments involving only one temperature sensor, step 402 is not performed and the room temperature value is obtained by applying the mathematical model to t1 (or to u=t1).

Also, u may be obtained based on more than two ambient temperature values. For example, if a third temperature sensor senses a third ambient temperature value t3 in the target zone 208, then u may be determined based on t1, t2 and t3. For example, u=(t1+t2+t3)/3, or some other weighted average of t1, t2, and t3.

At step 404, the heating power of the heating device 200 is controlled (for example by controlling the valve 205) based on the estimated room temperature value. Step 404 may also consider a target temperature value, or a gap between the target temperature value and the room temperature value, to control the heating power. The control of the heating power based on a target temperature and an estimated temperature is known and is not further detailed in the present application.

At step 405, the control device 201 may receive an updated mathematical model via the network interface 207.

The method then goes back to step 400 to store the updated mathematical model in replacement of the previously stored mathematical model.

According to some embodiments, the room temperature can be evaluated based on temperatures measured at two different locations, even though the two different locations are near to each other, for example within a distance of:

- few centimeters when both temperature sensors are located within the valve;

- few millimeters or less when both temperature sensors are mounted on the PCB inside the control device 201.

This enables to improve the compactness of the control device 201.

When the two temperature sensors 203.1 and 203.2 are very close to each other (few millimeters for example), then the first and second ambient temperature values are very close (unless one of the temperature sensors is defective as explained above), and t1 or t2 can be used alone as input for the model (u=t1 or u=t2).

It will further be understood that while a common model may be generated and employed for both vertical and horizontal orientations of the control device, in some embodiments, different models (e.g., same type of model but different coefficients; or different type of model) may be employed for respective vertical and horizontal orientations. The orientation of the control device may be specified manually (e.g., a switch, programmatically via an app interface, etc.) or automatically (based on an orientation sensor included within the control device), with the corresponding model then being applied (e.g., by processor 204) to estimate the room temperature.

Another independent aspect of some embodiments of the invention concerns a control device comprising:

- a first temperature sensor arranged for acquiring a first ambient temperature value in a target zone located in the vicinity of a heating device;
- a second temperature sensor arranged for acquiring a second ambient temperature value in the target zone;
- a processor configured for controlling a heating power of the heating device based on the first and second temperature values.

Having two sensors acquiring ambient temperatures in the same zone makes the temperature estimation more reliable than using a single temperature sensor, or using two temperature sensors sensing in different zones (for example one sensor sensing in the target zone and one sensing in the pipe 202), although some embodiments may employ sensors configured to acquire ambient temperature measurements in different target zones. For example, some embodiment may provide at least one sensor disposed at each of different respective displacements along the cylindrical axis (e.g., adding two additional sensors configured similarly to sensors 203.1 and 203.2, but disposed closer to portion 211. As for the other aspects of some embodiments of the invention, the target zone may be in the vicinity of the control device and it may exclude the pipe 202 and the heating device 200. Excluding the pipe 202 and the heating device 200 means that the temperature sensors are at least distanced by a minimum distance from the pipe 202 and from the heating device 200. The orientation of the temperature sensors may also be opposite to the heating device and/or to the pipe 202.

**Claims**

1. A method for controlling heating power of a heating system, the heating system comprising a heating device (200), a valve (205) and a control device (201), the control device (201) comprising:

   - a first temperature sensor (203.1) arranged for sensing a first ambient temperature value in a target zone located in the vicinity of the control device;
   - a second temperature sensor (203.2) arranged for sensing a second ambient temperature value in the same target zone located in the vicinity of the control device;
   the control device having a cylindrical shape, the cylindrical shape having a circumference defined by a circle, and the first and second temperature sensors being located near the outer cylindrical edge of the control device in a portion of the control device being opposite to a portion that is arranged for being connected to the valve, the two sensors being positioned in a same plane perpendicular to the axis of the cylinder in such a way that an angle ($\alpha$) being defined in the plane between a line passing through the axis of the cylinder and the first temperature sensor and a line passing through the axis of the cylinder and the second temperature sensor, the angle ($\alpha$) being comprised between 60° and 180°;
   the control device being adapted to control the heating power of the heating device by regulating a flow of heating fluid going through a pipe of the heating device via the valve;
   the method being executed by the control device and comprising the following operations:

      - receiving (401) the first ambient temperature value from the first temperature sensor;
      - receiving (402) the second ambient temperature value from the second temperature sensor;
      - estimating (403) a room temperature value by applying a mathematical model to the first and second ambient temperature values, said room temperature value being representative of the temperature in a room where the heating device is located;
      - controlling (404), via the valve, the heating power of the heating device based on the estimated room temperature value.

2. The method according to claim 1, wherein the mathematical model is a linear polynomial model.

3. The method according to claim 2, wherein the linear polynomial model is noted y = f(u), where y is the room temperature value, u is a variable depending at least on the first ambient temperature value, and f is the linear polynomial model and is defined by:

$$y(k) + a_1 y(k-1) + \cdots + a_{k_a} y(k-k_a)$$
$$= b_0 u(k-n) + b_1 u(k-n-1) + \cdots + b_{k_b-1} u(k-n-k_b+1) + e(k)$$

   wherein k is a time index;

wherein ka, kb and n are constants and wherein a1 to $a_{k_a}$ and b0 to $b_{k_b-1}$ are coefficients of the linear polynomial model;
wherein e(k) is an error of index k.

4. The method according to claim 3, wherein the mathematical model is applied to an average value of the first and second temperature values.

5. The method according to one of the preceding claims, wherein the first ambient temperature value is acquired at regular time intervals.

6. The method according to claim 1, wherein the first and second temperature sensors are mounted on a Printed Circuit Board, PCB, of the control device.

7. The method according to one of the preceding claims, wherein the target zone excludes a pipe through which a heating fluid circulates to reach the heating device and/or excludes the heating device.

8. The method according to one of the preceding claims, wherein controlling the heating power of the heating device comprises controlling the opening of a radiator valve (205).

9. The method according to one of the preceding claims, wherein the control of the heating power is further based on a target temperature.

10. The method according to one of the preceding claims, further comprising the following operations:

   receiving (405) an updated mathematical model;
   storing the updated mathematical model in replacement of the previously stored mathematical model.

11. A computer program executable by a processor and comprising instructions for, when executed by the processor, carrying out the steps of a method according to one of claims 1 to 10.

12. A control device (201) comprising:

   - a memory (206) storing a mathematical model;
   - a first temperature sensor (203.1) arranged for acquiring a first ambient temperature value in a target zone located in the vicinity of the control device;
   - a second temperature sensor (203.2) arranged for acquiring a second ambient temperature value in the same target zone;
   - a processor (204) configured for estimating a room temperature value by applying the mathematical model to the first and second ambient temperature values and configured for controlling a heating power of a heating device (200) based on the estimated room temperature value;
   wherein the room temperature value is representative of the temperature in a room where the heating device is located,
   wherein the control device has a cylindrical shape, the cylindrical shape having a circumference defined by a circle, and the first and second temperature sensors being located near the outer cylindrical edge of the control device in a portion of the control device being opposite to a portion that is arranged for being connected to the valve, the two sensors being positioned in a same plane perpendicular to the axis of the cylinder in such a way that an angle ($\alpha$) being defined in the plane between a line passing through the axis of the cylinder and the first temperature sensor and a line passing through the axis of the cylinder and the second temperature sensor, the angle ($\alpha$) being comprised between 60° and 180°,
   the control device being adapted to control the heating power of a heating device by regulating a flow of heating fluid going through a pipe of the heating device via a valve.

13. The control device according to claim 12, wherein the first temperature sensor (203.1) and the second temperature sensor (203.2) are located in a top portion (209) of the control device (201), said top portion being opposite to a portion (211) that is arranged to be connected to a valve (205).

14. The control device (201) according to claim 13, further comprising a pickup zone in the top portion being in fluid connection with the air in the vicinity of the control device, wherein the first temperature sensor is arranged for sensing the temperature in the pickup zone.

15. The control device according to one of claims 12 to 14, further comprising a network interface (207) arranged for receiving an updated mathematical model, and wherein the control device (201) is configured to replace the previously stored mathematical model by the updated mathematical model in the memory (206).

16. A heating system comprising a heating device (200), a valve (205) and a control device (201) according to one of claims 12 to 15.

17. The heating system according to claim 16, wherein at least the first temperature sensors (203.1) is separated from the heating device (200) and/or from a pipe (202) connected to the heating device by at least a minimum distance so that the target zone excludes the heating device and/or the pipe.

**Patentansprüche**

1. Verfahren zum Steuern der Heizleistung eines Heizsystems, wobei das Heizsystem eine Heizvorrichtung (200), ein Ventil (205) und eine Steuervorrichtung (201) umfasst, wobei die Steuervorrichtung (201) Folgendes umfasst:

- einen ersten Temperatursensor (203.1), der zum Erfassen eines ersten Umgebungstemperaturwerts in einer Zielzone angeordnet ist, die sich in der Nähe der Steuervorrichtung befindet;
- einen zweiten Temperatursensor (203.2), der zum Erfassen eines zweiten Umgebungstemperaturwerts in derselben Zielzone angeordnet ist, die sich in der Nähe der Steuervorrichtung befindet;
wobei die Steuervorrichtung eine zylindrische Form aufweist, wobei die zylindrische Form einen Umfang aufweist, der durch einen Kreis definiert ist, und wobei der erste und der zweite Temperatursensor nahe dem äußeren zylindrischen Rand der Steuervorrichtung in einem Abschnitt der Steuervorrichtung angeordnet sind, der einem Abschnitt gegenüberliegt, der dazu angeordnet ist, mit dem Ventil verbunden zu werden, wobei die beiden Sensoren in einer gleichen Ebene senkrecht zur Achse des Zylinders so positioniert sind, dass ein Winkel ($\alpha$) in der Ebene zwischen einer durch die Achse des Zylinders und den ersten Temperatursensor verlaufenden Linie und einer durch die Achse des Zylinders und den zweiten Temperatursensor verlaufenden Linie definiert ist, wobei der Winkel ($\alpha$) zwischen 60° und 180° liegt;
wobei die Steuervorrichtung dazu ausgelegt ist, die Heizleistung der Heizvorrichtung durch Regeln eines Stroms von Heizfluid, das durch ein Rohr der Heizvorrichtung über das Ventil strömt, zu steuern;
wobei das Verfahren durch die Steuervorrichtung ausgeführt wird und die folgenden Operationen umfasst:

- Empfangen (401) des ersten Umgebungstemperaturwerts von dem ersten Temperatursensor;
- Empfangen (402) des zweiten Umgebungstemperaturwerts von dem zweiten Temperatursensor;
- Schätzen (403) eines Raumtemperaturwerts durch Anwenden eines mathematischen Modells auf den ersten und den zweiten Umgebungstemperaturwert, wobei der Raumtemperaturwert repräsentativ für die Temperatur in einem Raum ist, in dem sich die Heizvorrichtung befindet;
- Steuern (404), über das Ventil, der Heizleistung der Heizvorrichtung basierend auf dem geschätzten Raumtemperaturwert.

2. Verfahren nach Anspruch 1, wobei das mathematische Modell ein lineares Polynommodell ist.

3. Verfahren nach Anspruch 2, wobei das lineare Polynommodell als y = f(u) dargestellt wird, wobei y der Raumtemperaturwert ist, u eine Variable ist, die mindestens von dem ersten Umgebungstemperaturwert abhängt, und f das lineare Polynommodell ist und durch Folgendes definiert ist:

$$y(k) + a_1 y(k-1) + \cdots + a_{k_a} y(k - k_a)$$
$$= b_0 u(k-n) + b_1 u(k-n-1) + \cdots + b_{k_b-1} u(k-n-k_b+1) + e(k)$$

wobei k ein Zeitindex ist;
wobei ka, kb und n Konstanten sind und wobei a1 bis $a_{k_a}$ und b0 bis $b_{k_b-1}$ Koeffizienten des linearen Polynommodells sind;
wobei e(k) ein Fehler des Index k ist.

4. Verfahren nach Anspruch 3, wobei das mathematische Modell auf einen Mittelwert des ersten und des zweiten Temperaturwerts angewendet wird.

5. Verfahren nach einem der vorhergehenden Ansprüche, wobei der erste Umgebungstemperaturwert in regelmäßigen Zeitintervallen erfasst wird.

6. Verfahren nach Anspruch 1, wobei der erste und der zweite Temperatursensor auf einer Leiterplatte, PCB, der Steuervorrichtung montiert sind.

7. Verfahren nach einem der vorhergehenden Ansprüche, wobei die Zielzone ein Rohr ausschließt, durch das ein Heizfluid zur Heizvorrichtung zirkuliert und/oder die Heizvorrichtung ausschließt.

8. Verfahren nach einem der vorhergehenden Ansprüche, wobei das Steuern der Heizleistung der Heizvorrichtung das Steuern des Öffnens eines Kühlerventils (205) umfasst.

9. Verfahren nach einem der vorhergehenden Ansprüche, wobei die Steuerung der Heizleistung ferner auf einer Zieltemperatur basiert.

10. Verfahren nach einem der vorhergehenden Ansprüche, ferner umfassend die folgenden Operationen:

   Empfangen (405) eines aktualisierten mathematischen Modells;
   Speichern des aktualisierten mathematischen Modells als Ersatz für das zuvor gespeicherte mathematische Modell.

11. Computerprogramm, das durch einen Prozessor ausführbar ist und Anweisungen zum Ausführen der Schritte eines Verfahrens nach einem der Ansprüche 1 bis 10 umfasst, wenn es durch den Prozessor ausgeführt wird.

12. Steuervorrichtung (201), umfassend:

   - einen Speicher (206), der ein mathematisches Modell speichert;
   - einen ersten Temperatursensor (203.1), der zum Ermitteln eines ersten Umgebungstemperaturwerts in einer Zielzone angeordnet ist, die sich in der Nähe der Steuervorrichtung befindet;
   - einen zweiten Temperatursensor (203.2), der zum Ermitteln eines zweiten Umgebungstemperaturwerts in derselben Zielzone angeordnet ist;
   - einen Prozessor (204), der zum Schätzen eines Raumtemperaturwerts durch Anwenden des mathematischen Modells auf den ersten und den zweiten Umgebungstemperaturwert ausgelegt ist und zum Steuern einer Heizleistung einer Heizvorrichtung (200) basierend auf dem geschätzten Raumtemperaturwert ausgelegt ist; wobei der Raumtemperaturwert repräsentativ für die Temperatur in einem Raum ist, in dem sich die Heizvorrichtung befindet,
   wobei die Steuervorrichtung eine zylindrische Form aufweist, wobei die zylindrische Form einen Umfang aufweist, der durch einen Kreis definiert ist, und wobei der erste und der zweite Temperatursensor nahe dem äußeren zylindrischen Rand der Steuervorrichtung in einem Abschnitt der Steuervorrichtung angeordnet sind, der einem Abschnitt gegenüberliegt, der dazu angeordnet ist, mit dem Ventil verbunden zu werden, wobei die beiden Sensoren in einer gleichen Ebene senkrecht zur Achse des Zylinders so positioniert sind, dass ein Winkel ($\alpha$) in der Ebene zwischen einer durch die Achse des Zylinders und den ersten Temperatursensor verlaufenden Linie und einer durch die Achse des Zylinders und den zweiten Temperatursensor verlaufenden Linie definiert ist, wobei der Winkel ($\alpha$) zwischen 60° und 180° liegt;
   wobei die Steuervorrichtung dazu ausgelegt ist, die Heizleistung einer Heizvorrichtung durch Regeln eines Stroms von Heizfluid, das durch ein Rohr der Heizvorrichtung über ein Ventil strömt, zu steuern;

13. Steuervorrichtung nach Anspruch 12, wobei der erste Temperatursensor (203.1) und der zweite Temperatursensor (203.2) in einem oberen Abschnitt (209) der Steuervorrichtung (201) angeordnet sind, wobei der obere Abschnitt einem Abschnitt (211) gegenüberliegt, der angeordnet ist, um mit einem Ventil (205) verbunden zu werden.

14. Steuervorrichtung (201) nach Anspruch 13, ferner umfassend eine Aufnahmezone in dem oberen Abschnitt, die in Fluidverbindung mit der Luft in der Nähe der Steuervorrichtung steht, wobei der erste Temperatursensor zum Erfassen der Temperatur in der Aufnahmezone angeordnet ist.

**15.** Steuervorrichtung nach einem der Ansprüche 12 bis 14, ferner umfassend eine Netzwerkschnittstelle (207), die zum Empfangen eines aktualisierten mathematischen Modells angeordnet ist, und wobei die Steuervorrichtung (201) dazu ausgelegt ist, das zuvor gespeicherte mathematische Modell durch das aktualisierte mathematische Modell in dem Speicher (206) zu ersetzen.

**16.** Heizsystem, umfassend eine Heizvorrichtung (200), ein Ventil (205) und eine Steuervorrichtung (201) nach einem der Ansprüche 12 bis 15.

**17.** Heizsystem nach Anspruch 16, wobei mindestens der erste Temperatursensor (203.1) von der Heizvorrichtung (200) und/oder von einem mit der Heizvorrichtung verbundenen Rohr (202) um mindestens einen minimalen Abstand getrennt ist, so dass die Zielzone die Heizvorrichtung und/oder das Rohr ausschließt.

**Revendications**

**1.** Procédé de commande de la puissance de chauffage d'un système de chauffage, le système de chauffage comprenant un dispositif de chauffage (200), une vanne (205) et un dispositif de commande (201), le dispositif de commande (201) comprenant :

- un premier capteur de température (203.1) agencé pour détecter une première valeur de température ambiante dans une zone cible située à proximité du dispositif de commande ;
- un second capteur de température (203.2) agencé pour détecter une seconde valeur de température ambiante dans la même zone cible située à proximité du dispositif de commande ;
le dispositif de commande ayant une forme cylindrique, la forme cylindrique ayant une circonférence définie par un cercle, et les premier et second capteurs de température étant situés près du bord cylindrique externe du dispositif de commande dans une partie du dispositif de commande étant opposée à une partie qui est agencée pour être reliée à la vanne, les deux capteurs étant positionnés dans un même plan perpendiculaire à l'axe du cylindre de telle manière qu'un angle ($\alpha$) est défini dans le plan entre une ligne passant par l'axe du cylindre et le premier capteur de température et une ligne passant par l'axe du cylindre et le second capteur de température, l'angle ($\alpha$) étant compris entre 60° et 180° ;
le dispositif de commande étant adapté pour commander la puissance de chauffage du dispositif de chauffage en régulant un débit de fluide chauffant traversant un tuyau du dispositif de chauffage par l'intermédiaire de la vanne ;
le procédé étant exécuté par le dispositif de commande et comprenant les opérations suivantes :

- la réception (401) de la première valeur de température ambiante en provenance du premier capteur de température ;
- la réception (402) de la seconde valeur de température ambiante en provenance du second capteur de température ;
- l'estimation (403) d'une valeur de température ambiante en appliquant un modèle mathématique aux première et seconde valeurs de température ambiante, ladite valeur de la température ambiante étant représentative de la température dans une pièce où le dispositif de chauffage est situé ;
- la commande (404), par l'intermédiaire de la vanne, de la puissance de chauffage du dispositif de chauffage sur la base de la valeur de température ambiante estimée.

**2.** Procédé selon la revendication 1, dans lequel le modèle mathématique est un modèle polynomial linéaire.

**3.** Procédé selon la revendication 2, dans lequel le modèle polynomial linéaire est noté y = f(u), où y est la valeur de température ambiante, u est une variable dépendant au moins de la première valeur de température ambiante, et f est le modèle polynomial linéaire et est défini par :

$$y(k) + a_1 y(k-1) + \cdots + a_{k_a} y(k - k_a)$$
$$= b_0 u(k-n) + b_1 u(k-n-1) + \cdots + b_{k_b - 1} u(k - n - k_b + 1) + e(k)$$

dans lequel k est un indice temporel ;
dans lequel ka, kb et n sont des constantes et dans lequel a1 à $a_{k_a}$ et b0 à $b_{k_b-1}$ sont des coefficients du modèle polynomial linéaire ;

dans lequel e(k) est une erreur d'indice k.

4. Procédé selon la revendication 3, dans lequel le modèle mathématique est appliqué à une valeur moyenne des première et seconde valeurs de température.

5. Procédé selon l'une des revendications précédentes, dans lequel la première valeur de température ambiante est acquise à des intervalles de temps réguliers.

6. Procédé selon la revendication 1, dans lequel les premier et second capteurs de température sont montés sur une carte de circuit imprimé, PCB, du dispositif de commande.

7. Procédé selon l'une des revendications précédentes, dans lequel la zone cible exclut un tuyau à travers lequel un fluide chauffant circule pour atteindre le dispositif de chauffage et/ou exclut le dispositif de chauffage.

8. Procédé selon l'une des revendications précédentes, dans lequel la commande de la puissance de chauffage du dispositif de chauffage comprend la commande de l'ouverture d'une vanne de radiateur (205).

9. Procédé selon l'une des revendications précédentes, dans lequel la commande de la puissance de chauffage est en outre basée sur une température cible.

10. Procédé selon l'une des revendications précédentes, comprenant en outre les opérations suivantes :

la réception (405) d'un modèle mathématique mis à jour ;
le stockage du modèle mathématique mis à jour en remplacement du modèle mathématique précédemment stocké.

11. Programme informatique exécutable par un processeur et comprenant des instructions pour, lorsqu'il est exécuté par le processeur, mettre en œuvre les étapes d'un procédé selon l'une des revendications 1 à 10.

12. Dispositif de commande (201) comprenant :

- une mémoire (206) stockant un modèle mathématique ;
- un premier capteur de température (203.1) agencé pour acquérir une première valeur de température ambiante dans une zone cible située à proximité du dispositif de commande ;
- un second capteur de température (203.2) agencé pour acquérir une seconde valeur de température ambiante dans la même zone cible ;
- un processeur (204) configuré pour estimer une valeur de température ambiante en appliquant le modèle mathématique aux première et seconde valeurs de température ambiante et configuré pour commander une puissance de chauffage d'un dispositif de chauffage (200) sur la base de la valeur de température ambiante estimée ;
dans lequel la valeur de température ambiante est représentative de la température dans une pièce où le dispositif de chauffage est situé,
dans lequel le dispositif de commande a une forme cylindrique, la forme cylindrique ayant une circonférence définie par un cercle, et les premier et second capteurs de température étant situés près du bord cylindrique externe du dispositif de commande dans une partie du dispositif de commande étant opposée à une partie qui est agencée pour être reliée à la vanne, les deux capteurs étant positionnés dans un même plan perpendiculaire à l'axe du cylindre de telle manière qu'un angle ($\alpha$) est défini dans le plan entre une ligne passant par l'axe du cylindre et le premier capteur de température et une ligne passant par l'axe du cylindre et le second capteur de température, l'angle ($\alpha$) étant compris entre 60° et 180°,
le dispositif de commande étant adapté pour commander la puissance de chauffage d'un dispositif de chauffage en régulant un débit de fluide chauffant traversant un tuyau du dispositif de chauffage par l'intermédiaire d'une vanne.

13. Dispositif de commande selon la revendication 12, dans lequel le premier capteur de température (203.1) et le second capteur de température (203.2) sont situés dans une partie supérieure (209) du dispositif de commande (201), ladite partie supérieure étant opposée à une partie (211) qui est agencée pour être reliée à une vanne (205).

14. Dispositif de commande (201) selon la revendication 13, comprenant en outre une zone de détection dans la partie supérieure étant en liaison fluidique avec l'air à proximité du dispositif de commande, dans lequel le premier capteur de température est agencé pour détecter la température dans la zone de détection.

15. Dispositif de commande selon l'une des revendications 12 à 14, comprenant en outre une interface de réseau (207) agencée pour recevoir un modèle mathématique mis à jour, et dans lequel le dispositif de commande (201) est configuré pour remplacer le modèle mathématique précédemment stocké par le modèle mathématique mis à jour dans la mémoire (206).

16. Système de chauffage comprenant un dispositif de chauffage (200), une vanne (205) et un dispositif de commande (201) selon l'une des revendications 12 à 15.

17. Système de chauffage selon la revendication 16, dans lequel au moins le premier capteur de température (203.1) est séparé du dispositif de chauffage (200) et/ou d'un tuyau (202) relié au dispositif de chauffage d'au moins une distance minimale de sorte que la zone cible exclut le dispositif de chauffage et/ou le tuyau.

**FIG. 1a**

**FIG. 1b**

Control device <u>201</u>

203.1

207

203.2

Processor
<u>204</u>

Memory
<u>206</u>

Nwk Int
<u>207</u>

Heating device <u>200</u>

Actuator 212

Valve
<u>205</u>

Pipe <u>202</u>

Pipe
<u>202</u>

# FIG. 2

**FIG. 3a**

**FIG. 3b**

FIG. 4

**EP 3 660 621 B1**

**REFERENCES CITED IN THE DESCRIPTION**

**Patent documents cited in the description**

- GB 2452043 A
- US 2005209813 A1
- EP 3056825 A2
- US 2013204442 A
- US 2013178989 A